# EUROPÄISCHE PATENTANMELDUNG

(11) **EP 4 597 242 A1**
(43) Veröffentlichungstag der Anmeldung: **06.08.2025**
(21) Anmeldenummer: 25155419.2
(22) Anmeldetag: 31.01.2025
(51) Int. Cl.: G05B 19/404, G05B 19/418, B21D 5/00, B21D 5/14

(54) **VERFAHREN UND SYSTEM ZUM WALZRUNDEN EINES BLECHS**

(30) Priorität: 31.01.2024 DE 102024200903
(71) Anmelder: Fraunhofer-Gesellschaft zur Förderung der angewandten Forschung e.V., 80686 München (DE)
(72) Erfinder: KAPPIS, Lukas Vincent, 18059 Rostock (DE); FROITZHEIM, Pascal, 18059 Rostock (DE)
(74) Vertreter: Pfenning, Meinig & Partner mbB

(57) **Zusammenfassung**

Die Erfindung betrifft u.a. ein Verfahren zum Walzrunden eines Blechs (16) mit einer Walzrundvorrichtung (20), wobei:
• eine Steuereinrichtung (30) wenigstens einen Aufgabenparameter erhält, der eine durchzuführende Walzrundaufgabe beschreibt, wobei der Aufgabenparameter eine Zielkrümmung angibt,
• die Steuereinrichtung (30) den wenigstens einen Aufgabenparameter wenigstens einem walzrundvorgangsspezifischen Modell zuführt, das für eine spezifische Art eines Walzrundvorgangs einen Zusammenhang aus einer erzielbaren Krümmung und wenigstens einem Prozessführungsparameter beschreibt,
• die Steuereinrichtung (30) anhand des walzrundvorgangsspezifischen Modells eine Einstellung für den wenigstens einen Prozessführungsparameter zum zumindest anteiligen Erreichen der Zielkrümmung ermittelt,
• die Walzrundvorrichtung (30) unter Anwendung der ermittelten Einstellung des Prozessführungsparameters die Walzrundaufgabe ausführt.

## Beschreibung

Die Erfindung betrifft ein Verfahren und ein System zum Walzrunden eines Blechs.

Das Walzrunden ist ein Fertigungsverfahren, bei dem Bleche mithilfe von typischerweise drei oder vier rotierenden Walzen kontinuierlich rundgebogen werden. Im Dickblechbereich mit einer typischen Dicke t von t > 3 mm wird es insbesondere für die Herstellung von großvolumigen Rohren und Schalen verwendet, die beispielsweise im maritimen Sektor oder in der Bauindustrie eingesetzt werden.

Ein bedeutendes technisches Problem stellt die zielgerichtete Führung des Walzrundprozesses zur Erreichung eines gewünschten Umformergebnisses dar. Aufgrund von fertigungsbedingten Schwankungen der Werkstoffeigenschaften der Bleche (Festigkeit, Eigenspannungen, Dicke etc.) besitzen unterschiedliche Bleche ein signifikant unterschiedliches Umformverhalten. Aus diesem Grund kann bisher keine deterministische Maschineneinstellung für ein gewünschtes Umformergebnis festgelegt werden. Stattdessen muss die Prozessführung individuell an jedes Blech angepasst werden, d. h. es erfolgt keine sog. objektive Prozessführung.

Insbesondere im Dickblechbereich wird die Prozessführung bisher zumeist durch den Maschinenbediener übernommen. Hierbei stellt der Bediener die Maschine nach seiner subjektiven Einschätzung und auf Grundlage seiner Erfahrung ein. Um eine zwischenzeitliche Ist-Krümmung zu ermitteln und mit einer Soll-Krümmung abgleichen zu können, unterbricht der Bediener den Prozess und hält eine die Soll-Krümmung anzeigende Schablone an das Blech. Anhand des sich ergebenden Lichtspalts kann er die fehlende Krümmung abschätzen und die Maschineneinstellung entsprechend anpassen.

Da das Blech bei einer zu starken Zustellung der Walzen überbogen wird, was zu kostspieligem Ausschuss führen kann, führt der Bediener den Umformprozess iterativ durch und nähert sich schrittweise an die Zielkrümmung an. Dieses Vorgehen hat den Nachteil, dass die Wirtschaftlichkeit des Verfahrens stark von der Qualifizierung des Bedieners abhängt. Dies birgt hohe Risiken für die Fertigungsunternehmen, da der Ausfall eines erfahrenen Mitarbeiters nur schwer kompensiert werden kann. Auch stellen der Aufbau und die Archivierung von Knowhow im Unternehmen eine Herausforderung dar.

Es existieren zudem Ansätze zur Modellierung und Simulation von Walzrundprozessen zum Auffinden geeigneter Maschineneinstellungen. Zum Beispiel existieren geometrische Modellierungen, bei denen jedoch wesentliche Einflussgrößen des Umformprozesses vernachlässigt werden. Weiter existieren datenbasierte Modellierungen, die jedoch nur begrenzt flexibel verwendbar sind und jeweils nur für spezielle Walzrundvorgänge gelten.

Schließlich existieren numerische Modellierungsansätzen, bei denen Maschineneinstellungen, die zu einem gewünschten Umformergebnis führen, näherungsweise in einem iterativen Verfahren berechnet werden. Hierbei werden wiederum Annahmen zugrunde gelegt, die jedoch insbesondere bei großen Blechdicken zunehmend ungenau werden. Auf der Finite-Elemente-Methode (FEM) basierende Ansätze zeichnen sich zudem weist durch hohe Rechenzeiten aus und erfordern ein hohes Niveau an Vorkenntnissen. Aus der DE 10 2017 122 073 A1 und DE 10 2018 126 336 A1 sind FEM-basierte Ansätze bekannt, die zur Verkürzung der Rechenzeit vereinfachte Ansatzfunktionen zur Beschreibung des Elementverhaltens verwenden.

Es besteht ein Interesse an alternativen objektiven Prozessführungslösungen, mit denen vorstehende Nachteile zumindest begrenzt werden können. Ein relevantes Einsatzszenario ist zudem, derartige Prozessführungslösungen zur Steuerung existierender Rundbiegemaschinen aufwandsarm nachrüsten zu können.

Vor diesem Hintergrund besteht eine Aufgabe der vorliegenden Erfindung darin, eine alternative objektive Prozessführungslösung für das Walzrunden von Blechen und insbesondere Dickblechen mit Dicken von mehr als 3 mm bereitzustellen.

Diese Aufgabe wird durch die Gegenstände der unabhängigen Patentansprüche gelöst. Vorteilhafte Weiterbildungen sind in der Beschreibung, in den Figuren und in den abhängigen Ansprüchen angegeben.

Entsprechend wird ein Verfahren zum Walzrunden eines Blechs und insbesondere eines Dickblechs mit einer Walzrundvorrichtung vorgeschlagen, wobei:
- eine Steuereinrichtung wenigstens einen Aufgabenparameter erhält, der eine durchzuführende Walzrundaufgabe beschreibt, wobei der Aufgabenparameter eine Zielkrümmung angibt,
- die Steuereinrichtung den wenigstens einen Aufgabenparameter wenigstens einem walzrundvorgangsspezifischen Modell zuführt, das für eine spezifische Art eines Walzrundvorgangs einen Zusammenhang aus einer erzielbaren Krümmung und wenigstens einem Prozessführungsparameter beschreibt,
- die Steuereinrichtung anhand des walzrundvorgangsspezifischen Modells eine Einstellung für den wenigstens einen Prozessführungsparameter zum zumindest anteiligen Erreichen der Zielkrümmung ermittelt,
- die Walzrundvorrichtung unter Anwendung der ermittelten Einstellung des Prozessführungsparameters die Walzrundaufgabe ausführt.

Im Rahmen dieser Offenbarung können die Begriffe Rundwalzen und Walzrunden gleichbedeutend verwendet werden.

Die Steuereinrichtung kann eine Computereinrichtung sein oder eine Computereinrichtung umfassen. Beispielsweise kann sie wenigstens einen Prozessor umfassen, der zum Ausführen des Verfahrens Programminstruktionen ausführt. Diese können in einer optionalen Speichereinrichtung der Steuereinrichtung hinterlegt sein.

Die Zielkrümmung kann auch als Soll-Krümmung bezeichnet werden oder eine solche darstellen. Es kann sich um diejenige Krümmung handeln, die laut der Walzrundaufgabe zu erreichen ist.

Die Walzrundaufgabe kann lediglich einen Walzrundvorgang umfassen, der zum Erreichen einer einzelnen Zielkrümmung ausgeführt werden soll. In diesem Fall kann die eine Einstellung für den Prozessführungsparameter ermittelt werden, mit der vorzugsweise die Zielkrümmung vollständig erreicht wird.

Es können jedoch auch mehrere Walzrundvorgänge innerhalb einer Sequenz von Walzrundvorgängen vorgegeben sein. In diesem Fall kann die Zielkrümmung eine final zu erreichende Zielkrümmung sein, die jedoch nach Ausführen eines initialen oder zumindest nicht abschließenden Walzrundvorgangs zunächst nur anteilig und z.B. nur entlang eines begrenzten Längenabschnitts erreichbar sein kann. Je mehr Walzrundvorgänge aus der optionalen Sequenz von Walzrundvorgängen ausgeführt wurden, desto näher kann man zu der Zielkrümmung über die gesamte Blechlänge gelangen.

Bei einer Sequenz von Walzrundvorgängen kann ein walzrundvorgangsspezifischen Modell für einen vorangehenden Walzrundvorgang innerhalb der Sequenz Eingangswerte für ein walzrundvorgangsspezifisches Modells eines nachfolgenden Walzrundvorgangs der Sequenz ermitteln und/oder übergeben. Diese Eingangswerte können zum Beispiel eine Vorkrümmung angeben, von welcher ausgehend der nachfolgende Walzrundvorgang eine weitere Umformung durchführen soll. Zusätzlich oder alternativ können derartige Eingangswerte aber auch gemessen werden. Auf deren Basis können mit dem walzrundvorgangsspezifischen Modell des nachfolgenden Walzrundvorgangs erstmalig Prozessführungsparameter berechnet oder bereits berechnete Prozessführungsparameter angepasst werden.

Das walzrundvorgangspezifische Modell kann ein Modell aus einer potentiellen Vielzahl von Modellen sein, wobei ein jeweiliges Modell spezifisch für einen aus einer vordefinierten Mehrzahl von Walzrundvorgängen definiert sein kann. Beispiele für verschiedene Walzrundvorgänge werden nachstehend erläutert. Ein Beitrag der hier offenbarten Lösung ist insbesondere in der Erkenntnis zu sehen, dass typische Walzrundaufgaben in eine Abfolge vordefinierter Walzrundvorgänge unterteilbar sind. Die einzelnen Modelle können jeweils für einen dieser Walzrundvorgänge gelten und diesen präzise abbilden. Das hier offenbarte Verfahren kann das Auswählen wenigstens eines entsprechenden Modells umfassen, insbesondere in Abhängigkeit eines durchzuführenden Walzrundvorgangs oder einer Sequenz von Walzrundvorgängen.

Die hier offenbarte Lösung zeichnet sich insbesondere durch die Unterteilung von Walzrundprozessen in unterschiedliche Walzrundvorgänge sowie die Definition entsprechend vorgangsspezifischer anstatt zum Beispiel universell verwendbarer Modelle aus. Mit diesen vorgangsspezifischen Modellen und insbesondere einer etwaigen Abfolge hiervon kann das Umformverhalten eines beliebigen Blechs bei flexiblen Prozessabläufen des Walzrundens zuverlässig und effizient berechnet werden.

Gegenüber den geometrischen Modellen aus dem Stand der Technik hat die hier offenbarte Lösung den Vorteil, dass sie flexibler ist und für die Führung von beliebigen Prozessabfolgen eingesetzt werden kann. Zudem bildet das Verfahren und bilden insbesondere optional hiervon umfasste FE-Simulationen, die gemäß nachstehenden Ausführungsformen vorgesehen sein können, den Prozess mit einer besseren Genauigkeit ab als die stark vereinfachten geometrischen Modellierungen des Standes der Technik.

Verglichen mit den existierenden numerischen Modellen für das Walzrunden hat die Erfindung den Vorteil, dass sie nicht auf theoretische Annahmen angewiesen ist, die bei großen Blechdicken zunehmend ungenau werden. Stattdessen kann sie prinzipiell für beliebige Blechdickenbereiche anwendbar sein. Gegenüber bekannten datenbasierten Modellen ist die offenbarte Lösung flexibler, da sie für verschiedene Prozessabfolgen eingesetzt werden kann und insbesondere nicht notwendigerweise auf nur einen Walzrundvorgang beschränkt ist. Zudem kann die offenbarte Lösung prinzipiell auch das Umformen begrenzter Abschnitte eines Blechs modellieren, wohingegen das vorbekannte datenbasierte Modell nur für konstante Umformungen über die gesamte Blechlänge Berechnungen anstellen kann.

Gemäß einer Weiterbildung erhält die Steuereinrichtung wenigstens einen weiteren Aufgabenparameter, der die Art eines von der Walzrundvorrichtung durchzuführenden Walzrundvorgangs angibt, und die Steuereinrichtung wählt dasjenige walzrundvorgangsspezifische Modell aus einer Mehrzahl von insbesondere vorgespeicherten walzrundvorgangsspezifischen Modellen aus, das dieser Art von Walzrundvorgang zugeordnet ist. Somit kann die Steuereinrichtung dazu eingerichtet sein, für eine jeweilige sich aktuell stellende Walzrundaufgabe die passenden Modelle auszuwählen. Insbesondere kann vorgesehen sein, dass sämtliche der Modelle bereits abrufbar hinterlegt sind und somit nicht je zu aktuell zu lösender Walzrundaufgabe erst erzeugt werden müssen.

Gemäß einer Weiterbildung ist die Art des Walzrundvorgangs eine von:
a) auslassseitigem Biegen,
b) einlassseitigem Biegen ohne Vorkrümmung,
c) einlassseitigem Biegen mit Vorkrümmung.

Es wurde erkannt, dass sich mit diesen Walzrundvorgängen - und insbesondere bei einer Berücksichtigung von sämtlichen hiervon - samt den dazugehörigen Modellen in der Praxis durchgeführte Rundwalzprozesse präzise abbilden lassen. Insbesondere können in der Praxis durchgeführte Rundwalzvorgänge als eine Abfolge dieser Walzrundvorgänge beschrieben werden. Die vorstehende Unterteilung kann als eine phänomenologische Unterteilung bezeichnet werden, insbesondere in Abhängigkeit davon, welche Seitenwalze einer 4-Walzenrundbiegemaschine in Abhängigkeit von der Walzrichtung zum Biegen verwendet wird.

So ist es beim Walzrunden und insbesondere bei dem Verwenden sogenannter 4-Walzenrundbiegemaschinen allgemein bekannt, dass das Blech zwischen zwei zentrischen Walzen eingespannt und durch das gezielte Zustellen einer seitlichen Walze punktuell gebogen wird. Die zentrischen Walzen werden in der Regel als Oberwalze und Unterwalze bezeichnet, wobei die Oberwalze vertikal oberhalb der Unterwalze angeordnet ist. Die seitlichen Walzen werden auch als Seitenwalzen bezeichnet. Eine aktive Stellung einer Walze bedeutet, dass diese sich in Anlage mit dem Blech befindet und/oder eine Biegekraft bzw. ein Biegemoment auf dieses ausübt. Um die Biegung kontinuierlich über die Blechlänge einzuprägen, werden die zentrischen Walzen typischerweise rotatorisch angetrieben. Aufgrund der Reibung zwischen den Walzen und dem Blech wird ein Vorschub erzeugt und das Blech kontinuierlich umgeformt.

Die Einlassseite und die Auslassseite können sich auf unterschiedliche Seiten der zentrischen Walzen beziehen, d. h. auf einer Seite dieser Walzen kann die Einlassseite und auf der anderen Seite die Auslassseite liegen. Die Einlassseite und die Auslassseite können sich gegenüberliegen, insbesondere horizontal gegenüberliegen. Die Einlass- und die Auslassseite können nach Maßgabe einer anfänglichen Zuführrichtung des zunächst unverformten Blechs definiert werden, wobei die Seite, an bzw. von der das Blech den zentrischen Walzen zugeführt wird die Einlassseite ist. Alternativ könnte auch von einer ersten und zweiten Seite in Bezug auf die zentrischen Walzen gesprochen werden.

Ein Zustand ohne Vorkrümmung kann beispielsweise dann vorliegen, wenn das im Wesentlichen ebene Blech erstmalig per Walzrunden umgeformt wird. Ein Zustand mit Vorkrümmung kann zum Beispiel dann vorliegen, wenn das Blech eine Walzrundmaschine unter Ausübung von Biegekräften bereits durchlaufen hat.

Unter einem auslassseitigen Biegen kann insbesondere verstanden werden, dass bspw. bei dem Verwenden einer 4-Walzenrundbiegemaschine die Seitenwalze auf einer Auslassseite eine Biegekraft aufbringt. Unter einem einlassseitigen Biegen kann insbesondere verstanden werden, dass bspw. bei dem Verwenden einer 4-Walzenrundbiegemaschine die Seitenwalze auf einer Einlassseite eine Biegekraft aufbringt.

Es wurde erfindungsgemäß erkannt, dass auf ein Vorsehen spezifischer Modelle für ein auslassseitiges Biegen mit Vorkrümmung und ohne Vorkrümmung verzichtet werden kann. Derartige vorkrümmungsabhängige Modelle für das auslassseitige Biegen können entsprechend nicht vorgesehen sein. Stattdessen wurde insbesondere erkannt, dass prozessbedingt nach einer gewissen Anlaufzeit von einem sich einstellenden stationären Umformzustand ausgegangen werden kann, der empirisch beschrieben werden kann. Dies wird nachstehend noch näher erläutert.

Im Falle des einlassseitigen Biegens mit Vorkrümmung kann die Vorkrümmung als eine Eingangsgröße des wenigstens einen walzrundvorgangsspezifischen Modells erhalten werden.

Im Falle des auslassseitigen Biegens kann das wenigstens eine walzrundvorgangsspezifische Modell auch den Zusammenhang zwischen einer Länge eines verbleibenden ungekrümmten Blechabschnitts und dem wenigstens einem Prozessführungsparameter beschreiben.

Alternativ oder zusätzlich kann beim auslassseitigen Biegen das wenigstens eine walzrundvorgangsspezifische Modell den Zusammenhang eines Ausma-ßes eines Knicks, der zwischen einem gekrümmten und einem ungekrümmten Abschnitt des Blechs vorliegt, und dem wenigstens einen Prozessführungsparameter beschreiben.

Gemäß einer weiteren Ausführungsform ist der wenigstens eine Prozessführungsparameter eine Walzenzustellung, insbesondere von einer etwaigen aktiven Seitenwalze, oder ein Anpressdruck.

Gemäß einer weiteren Ausführungsform wird als eine Eingangsgröße des wenigstens einen walzrundvorgangsspezifischen Modells wenigstens eine Dicke und optional wenigstens eine andere Abmessung des Blechs erhalten, wie zum Beispiel die Breite oder Länge. Alternativ oder zusätzlich kann eine Dehngrenze oder eine andere mechanische Eigenschaft des Blechmaterials erhalten werden. Insbesondere kann die Dehngrenze eines Mindestdehngrenze des Blechmaterials sein, die sich zum Beispiel aus der Werkstoffbezeichnung ergibt. Der Werkstoff übersteigt diese Mindestdehngrenze in der Realität häufig und ist somit fester als vom Modell angenommen. Dies senkt vorteilhafterweise die Gefahr von zu progressiven Berechnungen, die zu einem Überbiegen eines Blechs führen könnten.

Gemäß einer weiteren Ausführungsform wird als ein weiterer Aufgabenparameter eine umzusetzende Sequenz von Walzrundvorgängen unterschiedlicher Art erhalten. Diese Sequenz kann zum Beispiel von einem Benutzer vorgegeben werden, beispielsweise durch Auswahl einer vordefinierten Sequenz oder manuelle Definition einer solchen Sequenz. Die Steuereinrichtung kann dazu eingerichtet sein, anhand von walzrundvorgangsspezifischen Modellen, die diesen unterschiedlichen Arten der Walzrundvorgänge dieser Sequenz jeweils zugeordnet sind, eine Einstellung für wenigstens einen Prozessführungsparameter für jeden der Walzrundvorgänge zu ermitteln.

Gemäß einer weiteren Ausführungsform umfasst das Verfahren ferner ein Messen einer bei Ausführen der Walzrundaufgabe zwischenzeitlich hergestellten Krümmung und ein Verwenden des Messergebnisses zum erneuten Bestimmen der Einstellung des wenigstens einen Prozessführungsparameters anhand des wenigstens einen walzrundvorgangsspezifischen Modells. Hierdurch kann die Modellrechnung in einem Zwischenstadium anhand des realen Umformverhaltens bspw. durch eine Korrektur der angenommenen Werkstoffdehngrenze angepasst werden, was Prognosen mit einer hohen Genauigkeit ermöglicht. Die zwischenzeitlich hergestellte Krümmung kann noch nicht der Zielkrümmung entsprechen und insbesondere weniger stark ausgeprägt sein.

Gemäß einer weiteren Ausführungsform weist das Verfahren ferner auf: Erzeugen des wenigstens einen walzrundvorgangsspezifischen Modells, wobei das Erzeugen umfasst: computergestütztes Simulieren eines Walzrundvorgangs, wobei für wenigstens zwei unterschiedliche Einstellungen von wenigstens einem Prozessführungsparameter eine jeweils erzielbare Krümmung ermittelt wird und darauf basierend ein Zusammenhang der erzielbaren Krümmung und des Prozessführungsparameters ermittelt wird.

Gemäß einer weiteren Ausführungsform kann für jede Einstellung des wenigstens einen Prozessführungsparameters die erzielbare Krümmung in einem definierten Biegezustand ermittelt werden. Dabei ist der definierte Biegezustand vorzugsweise ein stationärer Biegezustand, bei dem bei fortlaufendem Blechvorschub und/oder zu unterschiedlichen Zeitpunkten während des Rundwalzens an sämtlichen ortsfesten Positionen innerhalb des Eingriffsbereichs der aktiven Walzen die im Wesentlichen gleiche Krümmung vorliegt. Im Fall einer 4-Walzenrundbiegemaschine können während eines Rundbiegens drei aktive Walzen vorliegen, nämliche die beiden zentrischen Walzen und eine der Seitenwalzen. Die im Wesentlichen gleiche Krümmung kann näherungsweise und/oder basierend auf der Annahme vorliegen, dass Eigengewichtseinflüsse des Blechs vernachlässigbar sind. In der Realität ändert sich mit steigendem Vorschub der Schwerpunkt des überhängenden Blechs. Dadurch verändert sich das Biegemoment aus dem Eigengewicht des Blechs, welches sich mit dem eingeprägten Biegemoment überlagert. Jedoch ist dieser Einfluss vergleichsweise gering und Rundbiegemaschinen verfügen im Allgemeinen über Mechaniken, um das Blech hinter dem Austritt abzustützen, zum Beispiel durch eine Stützrolle.

Gemäß einer weiteren Ausführungsform wird der Walzrundvorgang unter Berücksichtigung von verschiedenen Werten von wenigstens einem Blechkonfigurationsparameter simuliert und der ermittelte Zusammenhang wird in Abhängigkeit des wenigstens einen Blechkonfigurationsparameters ermittelt. Dies erhöht den Gültigkeitsbereich des erzeugten Modells entsprechend, nämlich auch in Bezug auf verschiedene Werte des Blechkonfigurationsparameters.

Die Erfindung betrifft auch ein Verfahren zum computergestützten Erzeugen eines Modells eines Walzrundvorgangs, der von einer Walzrundvorrichtung ausgeführt wird, mit:
computergestütztes Simulieren eines Walzrundvorgangs, wobei für wenigstens zwei unterschiedliche Einstellungen von wenigstens einem Prozessführungsparameter eine jeweils erzielbare Krümmung in einem definierten Biegezustand ermittelt wird, und
darauf basierendem Ermitteln eines Zusammenhangs der erzielbaren Krümmung und des Prozessführungsparameters,
wobei der definierte Biegezustand ein stationärer Biegezustand ist, bei dem bei fortlaufendem Blechvorschub an sämtlichen ortsfesten Positionen innerhalb des Eingriffsbereichs von aktiven Walzen der Walzrundvorrichtung die im Wesentlichen gleiche Krümmung vorliegt.

Die Erfindung betrifft auch ein System zum Walzrunden eines Blechs und insbesondere eines Dickblechs, umfassend:
- eine Steuereinrichtung, die dazu eingerichtet ist,:
   - wenigstens einen Aufgabenparameter zu erhalten, der eine durchzuführende Walzrundaufgabe beschreibt, wobei der Aufgabenparameter eine Zielkrümmung angibt,
   - den wenigstens einen Aufgabenparameter wenigstens einem walzrundvorgangsspezifischen Modell zuzuführen, das für eine spezifische Art eines Walzrundvorgangs einen Zusammenhang aus einer erzielbaren Krümmung und wenigstens einem Prozessführungsparameter beschreibt, und
   - anhand des walzrundvorgangsspezifischen Modells eine Einstellung für den wenigstens einen Prozessführungsparameter zum zumindest anteiligen Erreichen der Zielkrümmung zu ermitteln,
- eine Walzrundvorrichtung, die dazu eingerichtet ist, unter Anwendung der ermittelten Einstellung des Prozessführungsparameters die Walzrundaufgabe auszuführen.

Die Walzrundvorrichtung kann insbesondere eine 4-Walzenrundbiege-maschine sein.

Für die Merkmale des Verfahrens zum computergestützten Erzeugens eines Modells eines Walzrundvorgangs und für das vorstehende System können sämtliche hier offenbarte Weiterbildungen und Varianten, die im Kontext des Verfahrens zum Walzrunden offenbart sind, ebenfalls gelten.

Beispielhafte Ausführungsformen werden nachstehend anhand der beigefügten schematischen Figuren erläutert. In den Figuren können für vergleichbare Merkmale die gleichen Bezugszeichen verwendet werden.

Es zeigen:
- Figur 1:: zeigt ein Ablaufdiagramm eines Verfahrens zum Walzrunden von Dickblechen gemäß einer Ausführungsform,
- Figuren 2A-C:: zeigen unterschiedliche Walzrundvorgänge, für die das Verfahren jeweils ein spezifisches Modell vorsieht,
- Figur 3:: zeigt schematisch einen Simulationsumfang bei der Erzeugung der walrundvorgangsspezifischen Modelle,
- Figur 4:: zeigt ein beispielhaftes Ergebnis einer bei der Erzeugung von walrundvorgangsspezifischen Modellen durchgeführten FE-Simulation.

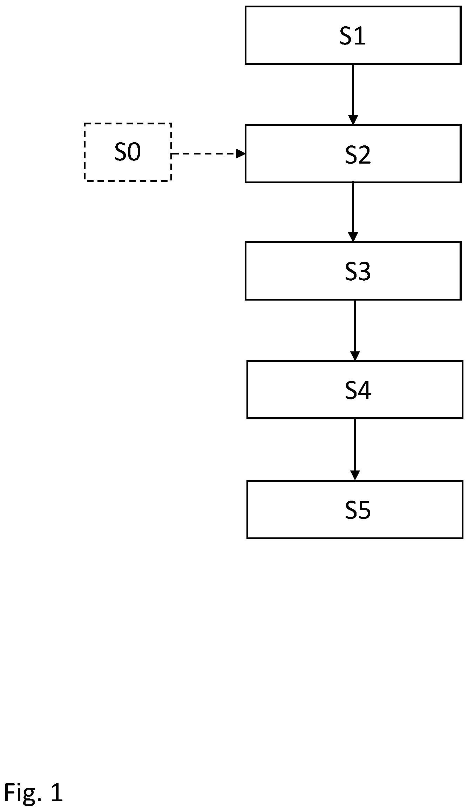

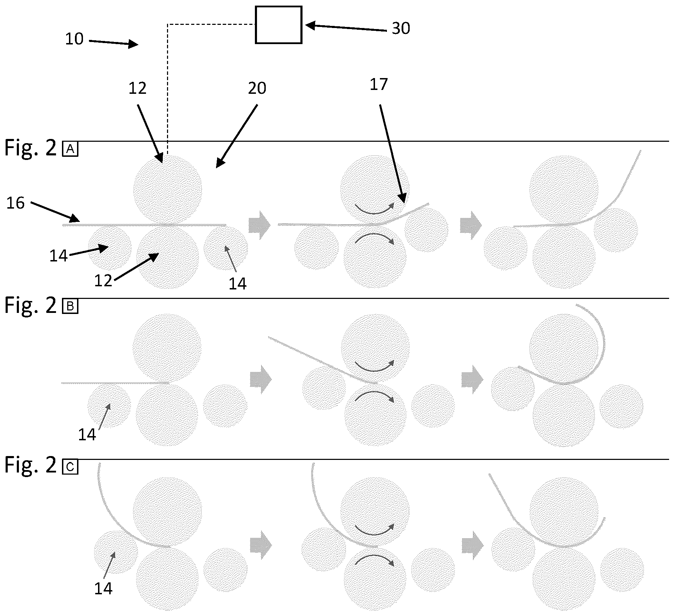

Figur 1 zeigt ein Ablaufdiagramm eines Verfahrens zum Walzrunden von Dickblechen gemäß einer Ausführungsform, wobei das Verfahren von einem System 10 umfassend eine Steuereinrichtung 30 und eine Walzrundvorrichtung 20 ausgeführt wird (sh. Fig. 2A). Das System 10 ist gemäß einer Ausführungsform der Erfindung ausgebildet.

Das Verfahren umfasst einen Schritt S1, in dem die Steuereinrichtung 30 wenigstens einen Aufgabenparameter erhält, der eine durchzuführende Walzrundaufgabe beschreibt. Der Aufgabenparameter gibt eine Zielkrümmung an, die als Resultat der Walzrundaufgabe erreicht werden soll.

Die Steuereinrichtung ist eine Computereinrichtung, die Programminstruktionen zum Bereitstellen der hier offenbarten Funktionalitäten ausführt. Der Aufgabenparameter wird zum Beispiel durch eine manuelle Eingabe erhalten, durch Analysieren oder Auslesen eines zu fertigenden Bauteils, oder dergleichen.

Weitere Aufgabenparameter, die gemäß dieser Ausführungsform erhalten werden, sind die Blechabmessungen, also die Dicke, Breite und Länge, sowie die Dehngrenze des Blechwerkstoffs. Zusätzlich kann in einer Ausführungsform vom Bediener eine Prozessabfolge zur Erreichung des Umformergebnisses vorgegeben werden. Alternativ kann zum Beispiel aus einer Auswahl von vordefinierten Prozessabfolgen eine Prozessabfolge automatisch oder manuell ausgewählt werden. Eine Prozessabfolge kann eine Abfolge unterschiedlicher Walzrundvorgänge umfassen, wie sie nachstehend anhand von Fig. 2 erläutert werden.

Zum Beispiel wird die Aufgabe gestellt, dass ein gerades Blech mit definierten Abmessungen über die gesamte Länge auf einen definierten Krümmungsradius als Zielkrümmungsradius umgeformt werden soll. Für die Prozessabfolge wird eine Sequenz aus auslassseitigem Biegen, einlassseitigem Biegen mit Vorkrümmung und auslassseitigem Biegen vorgegeben.

Zunächst Bezugnehmend auf die Figuren 2A-C werden die Eigenschaften dieser unterschiedlichen Walzrundvorgänge erläutert, die jeweils von der Walzrundvorrichtung 20 des Systems 10 ausgeführt werden. Dabei zeigen die Figuren 2A-C jeweils eine zeitlich von links nach rechts verlaufende Abfolge von Umformzuständen, die zeitlich aufeinanderfolgend im Rahmen der jeweiligen Walzrundvorgänge auftreten.

Wie aus Übersichtsgründen nur im Fall von Fig. 2A gezeigt, ist die Walzrundvorrichtung 20 ist eine 4-Walzenrundbiegemaschine und an die ebenfalls schematisch dargestellte Steuereinrichtung 30 des Systems 10 datenübertragend angeschlossen. Die Steuereinrichtung 30 ist dazu eingerichtet, die Walzrundvorrichtung 10 und insbesondere deren einzelne Walzen 12, 14 zu steuern. In an sich bekannter Weise umfasst die Walzrundvorrichtung 10 zwei zentrischen Walzen 12, die einander vertikal gegenüberliegen, sowie zwei Seitenwalzen 14, die auf unterschiedlichen Seiten des Paares von zentrischen Walzen 12 angeordnet sind.

Wie insbesondere aus Figur 2B deutlich wird, wird ein umzuformendes Blech 16 einer linken Seite der zentrischen Walzen 12 zugeführt, sodass die linke Seite eine entsprechende Einlassseite der Walzrundvorrichtung 20 darstellt. Hingegen stellt die rechte Seite der zentrischen Walzen 12 eine entsprechende Auslassseite der Walzrundvorrichtung 20 dar.

Zurückkommend auf Figur 2A wird zunächst das auslassseitige Biegen gezeigt. Dabei wird das Blech 16 zunächst wiederum von der Einlassseite eingezogen und dann von der auslassseitigen Seitenwalze 14 nach oben gebogen. Zum auslassseitigen Biegen wurde erfindungsgemäß Folgendes festgestellt: Grundsätzlich wird die maximale Umformung beim Walzrunden am Kontaktpunkt mit der Oberwalze (d.h. der vertikal oberen zentrischen Walze 12), dem sogenannten Biegepunkt, eingeprägt. Beim auslassseitigen Biegen bewegt sich der am Biegepunkt umgeformte Blechabschnitt im Zuge des Blechvorschubs zur aktiven Seitenwalze 14 hin. Ist das Blech 16 zu Beginn des Vorgangs schwächer gekrümmt als die Krümmung, die beim Biegevorgang eingeprägt wird, wird anfänglich ein "Knick" im Blech erzeugt, siehe den mittleren Zustand von Figur 2A und den dort markierten geknickten Abschnitt 17. Im Zuge des Vorschubs passiert dieser geknickte Abschnitt 17 die aktive Seitenwalze 14, was im mittleren und linken Zustand von Figur 2A gezeigt ist. Ab diesem Zeitpunkt liegt in guter Näherung für den restlichen Walzrundvorgang eine gleichbleibend starke Krümmung des Blechs im Eingriffsbereich der Walzen 12, 14 vor. Es stellt sich folglich nach einer gewissen Anlaufzeit ein stationärer Biegezustand der vorstehend definierten Art ein - wobei angenommen wird, dass das überhängende Blech abgestützt wird und den Biegevorgang nicht signifikant beeinflusst.

In Figur 2B ist ein einlassseitiges Biegen gezeigt, dass von der einlassseitigen Seitenwalze 14 ausgeführt wird. Das Blech 16 wird ohne Vorkrümmung zugeführt und gebogen. In Figur 2C ist ein einlassseitiges Biegen mit Vorkrümmung gezeigt.

Bei dem einlassseitigen Biegen wird der am Biegepunkt umgeformte Blechabschnitt im Zuge des Vorschubs von der aktiven Seitenwalze 14 wegbewegt. Innerhalb des Eingriffsbereichs der aktiven Walzen 12, 14 liegt somit von Beginn an ein stationärer Umformzustand vor, der durch die Vorkrümmung des Blechs definiert wird.

Zurückkommend auf Figur 1 führt die Steuereinrichtung 30 in einem Schritt S2 den wenigstens einen Aufgabenparameter wenigstens einem walzrundvorgangsspezifischen Modell zu, das für eine spezifische Art von einem der Walzrundvorgänge aus Figur 2 einen Zusammenhang aus einer erzielbaren Krümmung und wenigstens einem Prozessführungsparameter beschreibt. Die Art und Anzahl der walzrundvorgangsspezifischen Modelle bestimmt sich aus der erhaltenen Sequenz von Walzrundvorgängen.

Bevorzugt ist eine Mehrzahl nachstehend erläuterte Modelle in einer Speichereinrichtung der Steuereinrichtung 30 hinterlegt, aus denen diejenigen, die für eine aktuelle Walzrundaufgabe relevant sind, von der Steuereinrichtung 30 ausgelesen werden. Vorzugsweise sind für jeden Walzrundvorgang der Figuren 2A-C Modelle hinterlegt.

Zunächst bezugnehmend auf einen optionalen Schritt S0 in Figur 1 wird die Erstellung dieser Modelle erläutert. Der Schritt S0 muss nicht bei Durchführung des eigentlichen Verfahrens umfassend die S1-S5 durchgeführt werden, was prinzipiell aber möglich ist. Er kann auch zu einem beliebigen vorgelagerten Zeitpunkt durchgeführt werden. Zudem kann er von einem anderen System 10 oder allgemein einer anderen Einrichtung ausgeführt werden, wobei nach entsprechender Modellerstellung die Modelle in einem Speicher des Systems 10 aus Fig. 2A hinterlegt werden.

Die nachstehend detailliert erläuterte Modellerstellung lässt sich im Wesentlichen wie folgt zusammenfassen:
- Es handelt sich um ein Vorgehen, bei dem ein datenbasiertes Prozessführungsmodell zum Erhalten von Prozessführungsparametern erzeugt wird. Dieses Prozessführungsmodell umfasst eine Mehrzahl von walzrundvorgangsspezifischen Modellen für das Walzrunden, sh. die nachstehenden ersten bis fünften Modelle.
- Das Prozessführungsmodell bzw. die einzelnen hiervon umfassten walzrundvorgangsspezifischen Modelle unterliegen einer phänomenologischen Betrachtungsweise des Walzrundprozesses, bei der die unterschiedliche Walzrundvorgänge, auch als Biegevarianten bezeichnet, gemäß Fig. 2 identifiziert werden.
- Als zu modellierende Ergebnisgröße eines jeweiligen Modells wird für jede Biegevariante (d. h. für jede Art von Walzrundvorgang) ein stationärer Umformzustand gemäß vorstehender Definition identifiziert, für den die im Mittel erzeugte Krümmung modelliert wird. Zuzüglich gibt es mit dem Ausmaß des Knicks und dem geraden Ende beim auslassseitigen Biegen von geraden Blechen neben der Krümmung zwei weitere zu modellierende Ergebnisgrößen.
- Das Prozessführungsmodell setzt sich aus mehreren empirischen Modellen zusammen, nämlich den vorstehenden ersten bis fünften Modellen, da für jede Ergebnisgröße ein eigenes Modell entwickelt wird.
- Für die Generierung von Prozessdaten wird die Finite-Elemente-Methode verwendet. Der Versuchsplan der Simulationen orientiert sich an den identifizierten Biegevarianten.

Genauer gesagt lässt sich aus den zuvor ausgeführten zur Figur 2A-C ausgeführten phänomenologischen Betrachtungen schlussfolgern, für welche Ergebnisgrößen ein jeweiliges Modell vorzugsweise Berechnungen anstellen können sollte: In Abhängigkeit von den maßgeblichen Einflussgrößen ist zu berechnen, welche Krümmung bei den genannten Biegevarianten A (d.h. gemäß Fig. 2A), B (d.h. gemäß Fig. 2B), C (d.h. gemäß Fig. 2C) im Zuge eines stationären Umformzustands erzeugt wird. Da das Walzrunden gerader Bleche in der Praxis häufig mit dem auslassseitigen Biegen begonnen wird, ist hierfür zudem als eine weitere Ergebnisgröße die Länge des geraden Endes sowie das Ausmaß des "Knicks" bzw. des geknickten Abschnitts 17 gemäß Figur 2A zu berechnen, welcher eine lokale Überhöhung der eingeprägten Krümmung darstellt. Somit sind insgesamt fünf Größen für die Prozessführung relevant. Maßgebliche Einflussgrößen auf das Umformergebnis beim Walzrunden sind werkstückseitig die mechanischen Eigenschaften des Werkstoffs sowie die Blechabmessungen. Werkzeugseitig sind die Maschinenabmessungen, die Zustellung der seitlichen Biegewalze sowie der Anpressdruck der Unterwalze von Bedeutung.

Im Rahmen der nachstehend erläuterten rechnergestützten Generierung von Prozessdaten für die Entwicklung der jeweiligen walzrundvorgangspezifischen Modelle müssen diese Einflussgrößen folglich berücksichtigt werden. In einer Ausführungsform kann die Blechbreite vernachlässigt werden. Diese hat in der Praxis zwar einen Einfluss auf die Biegesteifigkeit des Blechs und muss daher hinsichtlich des maximalen Umformvermögens der Rundbiegemaschine berücksichtigt werden, auf die im stationären Biegezustand erzielte Krümmung hat sie dagegen nur einen geringen Einfluss. Weiterhin kann in einer Ausführungsform die Länge des Blechs vernachlässigt werden, wenn unterstellt wird, dass das durch den Vorschub überhängende Blech so abgestützt wird, dass dessen Eigengewicht die eingeprägte Biegung nicht signifikant beeinflusst. In einer weiteren Ausführungsform kann der Anpressdruck der Unterwalze unter der Annahme einer starren Lagerung als konstant angenommen und somit vernachlässigt werden.

Zur Modellerstellung werden zunächst Prozessdaten von einem jeweiligen Walzrundvorgang per rechnergestützter Simulation ermittelt. Genauer gesagt wird für die Generierung von Prozessdaten ein FE(Finite Elemente)-Modell verwendet. Dieses wird bevorzugt anhand von Experimenten mit einer modellierten Rundbiegemaschine verifiziert. Im Rahmen der FE-Modellierung werden E-Module und Fließkurven verwendet, um das elastoplastische Verhalten der Blechwerkstoffe nachzubilden. Für die jeweilige empirische Modellbildung werden aus diesen Daten numerische Kennwerte abgeleitet, über die interpoliert werden kann. In einer Ausführungsform kann hierzu die Werkstoffdehngrenze verwendet werden. Da beim Walzrunden hauptsächlich Baustähle mit unterschiedlichen Festigkeitsklassen umgeformt werden, bietet die Dehngrenze eine gute Repräsentation des elastoplastischen Werkstoffverhaltens. Das Ziel der FE-Modellierung ist es, Stützpunkte in einem definierten Parameterraum zu generieren, auf denen ein empirisches Modell für einen jeweiligen Walzrundvorgang (d. h. ein walzrundvorgangspezifisches Modell) entwickelt werden kann. Um das entsprechende Vorgehen zu beschreiben, wird im Folgenden eine Ausführungsform betrachtet, in der die Länge und Breite des Blechs sowie der Anpressdruck der Unterwalze vernachlässigt werden, indem für diese Größen ein konstanter Wert angenommen wird. Als blechspezifische Variablen verbleiben somit die Blechdicke und der Werkstoff.

Um das Umformverhalten einer Blechkonfiguration, die durch die Blechdicke sowie den Werkstoff gekennzeichnet ist, zu beschreiben, werden Simulationen zur Umformung des Blechs nach den drei Arten von Walzrundvorgängen aus Fig. 2 auf Basis eines jeweiligen FE-Modells durchgeführt. Dabei wird im Rahmen der Simulationen die Einstellung der Rundbiegemaschine variiert, um das Umformverhalten des Blechs in Abhängigkeit von der Prozessführung abzubilden.

Aus jeder Simulation kann ein Stützpunkt für die empirische Modellierung extrahiert werden. Hierbei ist zunächst festzulegen, wie viele Stützpunkte verwendet werden sollen, um das Umformverhalten im Zuge einer Biegevariante (d.h. einer Art von Walzrundvorgang gemäß den Figuren 2A-C) zu modellieren. Im Folgenden wird eine Ausführungsform beschrieben, in der vier Stützpunkte verwendet werden. In anderen Ausführungsformen kann die Anzahl der Stützpunkte kleiner oder bevorzugt größer sein.

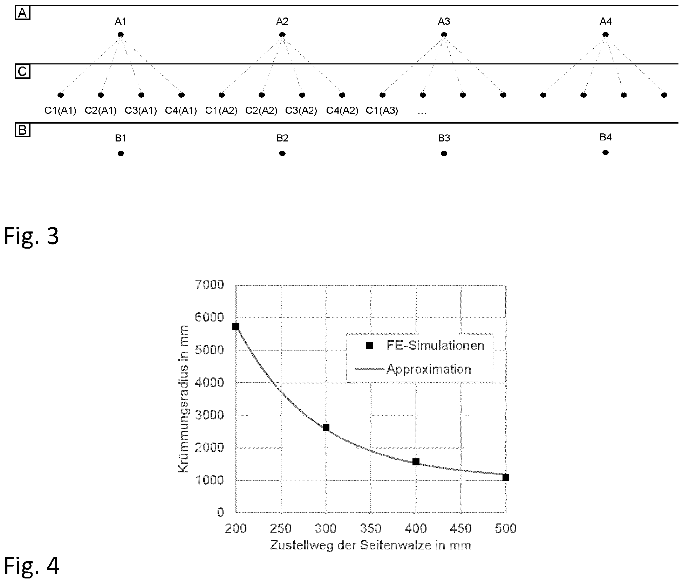

Der Simulationsumfang für eine Ausführungsform mit vier Stützpunkten ist in der Figur 3 dargestellt. Für die Biegevarianten A (d.h. gemäß Fig. 2A) und B (d.h. gemäß Fig. 2B) werden jeweils vier Simulationen durchgeführt, zwischen denen der Zustellweg der aktiven Seitenwalze schrittweise erhöht wird. Diese sind in der Abbildung mit den Bezeichnungen A1 bis A4 bzw. B1 bis B4 gekennzeichnet. Bei der Biegevariante C (d.h. gemäß Fig. 2C) muss mit der Vorkrümmung des Blechs eine weitere Einflussgröße berücksichtigt werden. Aus diesem Grund steigt hier die Anzahl der Simulationen mit dem Quadrat der gewählten Stützpunktezahl. Um einen Ausgangszustand mit einer Vorkrümmung im Blech zu erhalten, können die Simulationen der Biegevariante C bevorzugt auf den Umformergebnissen der Biegevariante A aufbauen. Für jeden Ausgangszustand Aᵢ ergeben sich somit vier Simulationen C1(Aᵢ) bis C4(Aᵢ). Anhand der Stützpunkte werden empirische Modelle für einen jeweiligen Walzrundvorgang entwickelt, wobei mittels dieser Modelle zwischen den Stützpunkten interpoliert werden kann. Um dies zu verdeutlichen, wird im Folgenden das Vorgehen zur Entwicklung eines Modells beschrieben, mit dem die im stationären Umformzustand aus der Biegevariante A resultierende Krümmung abgebildet werden kann. Zunächst wird für jede Simulation der Krümmungsradius ausgewertet, der im Mittel aus dem stationären Biegezustand, wie er zuvor im allgemeinen Beschreibungsteil definiert wurde, resultiert. Ein beispielhaftes Ergebnis hierzu ist in der Figur 4 dargestellt, bei der vier Stützpunkte als Ergebnis der durchgeführten FE-Simulationen markiert sind. Es zeigt sich, dass der Krümmungsradius nichtlinear vom Zustellweg der Seitenwalze abhängt und mit steigender Zustellung abnimmt.

Zur empirischen Modellierung der Korrelation zwischen dem Zustellweg der Seitenwalze und der resultierenden Krümmung können in einer Ausführungsform algebraische Funktionen an die Stützpunkte angepasst werden. In der Figur 4 wurde für die Anpassung eine exponentielle Funktion der Form *f*(*x*) = *y* = *a* - *b* · *c^{x}* verwendet. Die offenbarte Lösung ist jedoch nicht auf diese Funktion beschränkt. In einer alternativen Ausführungsform können die Stützpunkte direkt zum Training eines Modells aus der Gruppe der maschinellen Lernverfahren oder eines klassischen Regressionsmodells verwendet werden , welche jeweils die Interpolation zwischen den Stützpunkten vornehmen. Hierbei können die Daten vor dem Training transformiert werden, insbesondere zur Verbesserung der Modellqualität.

Nach dem beschriebenen Vorgehen werden auch für die weiteren identifizierten Ergebnisgrößen eines jeweiligen Walzrundvorgangs Approximationsfunktionen an die zugehörigen Stützpunkte angepasst. Somit werden fünf empirische Modelle erhalten, mit denen das Verhalten der Ergebnisgrößen beim Walzrunden der einen betrachteten Blechkonfiguration und über sämtliche Walrundvorgänge A-C hinweg nachgebildet werden kann:
- ein erstes Modell modelliert für das auslassseitige Biegen den Zusammenhang zwischen der erzielbaren Krümmung und einer Zustellung der aktiven Seitenwalze;
- ein zweites Modell modelliert für das auslassseitige Biegen den Zusammenhang zwischen einer Länge eines verbleibenden ungekrümmten Blechabschnitts und der Zustellung der aktiven Seitenwalze;
- ein drittes Modell modelliert für das auslassseitige Biegen den Zusammenhang zwischen dem Ausmaß eines Knicks, der zwischen einem gekrümmten und einem ungekrümmten Abschnitt des Blechs vorliegt, und der Zustellung der aktiven Seitenwalze. Dieses Ausmaß kann zum Beispiel als ein Winkel zwischen den entsprechenden Abschnitten des Blechs quantifiziert werden. Alternativ oder zusätzlich kann der lokale Radius betrachtet werden, der im Knick vorherrscht.
- ein viertes Modell modelliert für das einlassseitige Biegen ohne Vorkrümmung den Zusammenhang zwischen der erzielbaren Krümmung und einer Zustellung der aktiven Seitenwalze;
- ein fünftes Modell modelliert für das einlassseitige Biegen mit Vorkrümmung den Zusammenhang zwischen der erzielbaren Krümmung und einer Zustellung der aktiven Seitenwalze.

In einem nächsten Schritt wird die Komplexität dieser Modelle erhöht, damit die genannten Zusammenhänge auch für unterschiedliche Blecheigenschaften betrachtet werden können. Dabei kann jeweils diejenige Größe, deren Zusammenhang mit der Zustellung der aktiven Seitenwalze modelliert wird, als eine Ergebnisgröße eines jeweiligen Modells bezeichnet werden.

In diesem nächsten Schritt werden die beschriebenen walzrundvorgangsspezifischen Simulationsstudien sowie das Auswerteverfahren für unterschiedliche Blechkonfigurationen, die hinsichtlich Blechdicke und Werkstoff variieren, wiederholt. Als Ergebnis wird für jede Blechkonfiguration ein Satz aus empirischen Funktionen zur Beschreibung des blechspezifischen Verhaltens der Ergebnisgrößen erhalten.

Darauf aufbauend wird das Verhalten der Ergebnisgrößen zwischen den einzelnen Blechkonfigurationen interpoliert, damit eine stetige Modellierung bei unterschiedlichen Dicken und Werkstoffen erreicht werden kann. In einer beispielhaften Ausführungsform werden hierzu künstliche neuronale Netze (KNN) verwendet, wobei für jede Ergebnisgröße ein eigenes KNN benötigt wird. In einer alternativen Ausführungsform können hierzu auch andere Verfahren aus der Gruppe des maschinellen Lernens, zum Beispiel basierend auf Random-Forest-Algorithmen, oder klassische Regressionsmodelle verwendet werden. In einer alternativen Ausführungsform können algebraische Funktionen für die Interpolation verwendet werden.

Das Vorgehen zur Interpolation zwischen den Blechkonfigurationen wird im Folgenden am Beispiel der aus der Biegevariante A resultierenden Krümmung beschrieben. Für das Training eines KNN wird zunächst ein Datenbestand aufgebaut. Hierzu werden aus den zur Biegevariante A zugehörigen Daten Datensätze gebildet, wobei ein Datensatz die Eigenschaften des Blechs sowie die Parameter der zugehörigen Approximationsfunktion umfasst. Auf diesen Daten wird das KNN trainiert, wobei die Eigenschaften des Blechs als Eingangsgröße und die Parameter der Approximationsfunktion als Ausgangsgröße definiert werden. Als Ergebnis wird ein KNN erhalten, mit dem die Approximationsfunktion zur Beschreibung der aus der Biegevariante A resultierenden Krümmung für ein beliebiges Blech (innerhalb des trainierten Parameterraums) berechnet werden kann. Für die weiteren identifizierten Ergebnisgrö-ßen werden nach dem gleichen Prinzip Modelle entwickelt.

Insgesamt werden somit wiederum fünf entsprechend erweiterte empirische Modelle erhalten. Für eine bedienerfreundliche Anwendung in der Praxis können die entwickelten empirischen Modelle in ein übergeordnetes Prozessführungsmodell implementiert werden, das als ausführbares Programm hinterlegt ist und von der Steuereinrichtung 30 ausgeführt werden kann. Das Prozessführungsmodell kann eine grafische Benutzeroberfläche besitzen, in die ein Bediener eine Walzrundaufgabe eingeben kann und als Ergebnis eine zielführende Sequenz aus Maschineneinstellungen erhält.

Sämtliche der vorstehend erläuterten Maßnahmen zur Modellerstellung können von einem Verfahren zum computergestützten Erzeugen eines Modells eines Walzrundvorgangs, wie hierin offenbart, umfasst sein.

Zurückkommend auf Figur 1 ermittelt die Steuereinrichtung 30 in einem Schritt S3 anhand des wenigstens einen walzrundvorgangsspezifischen Modells - und insbesondere eines übergeordneten Prozessführungsmodells umfassend die vorstehenden ersten bis fünften Modelle - eine Einstellung für den wenigstens einen Prozessführungsparameter zum zumindest anteiligen Erreichen der Zielkrümmung.

Genauer gesagt werden für jeden Walzrundvorgang, der gemäß der erhaltenen Sequenz von Walzrundvorgängen auszuführen ist, Einstellungen für die Zustellung der jeweils aktiven Seitenwalze 14 mittels eines entsprechend walzrundvorgangsspezifischen Modells ermittelt.

Hierzu werden in einer Ausführungsform die jeweils modellierten Zusammenhänge bzw. die diesen zugrundeliegenden Approximationsfunktionen in einer Programmschleife unter Erhöhung der Walzenzustellung iterativ ausgeführt, bis eine Maschineneinstellung (d.h. ein Prozessführungsparameter) gefunden ist, bei der das gewünschte Umformergebnis (in der Regel eine gewünschte Krümmung) mit einer akzeptablen Genauigkeit erreicht wird. Die Genauigkeitsanforderung wird in Form eines Abbruchkriteriums definiert. Alternativ kann die Approximationsfunktion nach der gesuchten Maschineneinstellung umgestellt werden. Somit ist eine direkte Berechnung der Maschineneinstellung anhand der gegebenen Zielumformung möglich. In einer weiteren Ausführungsform wird , zum Beispiel als bzw. im Rahmen des Modells, ein maschinelles Lernverfahren oder ein klassisches Regressionsmodell verwendet, mit dem die gesuchte Maschineneinstellung direkt anhand von eingegeben Umformparametern berechnet wird.

In einem Schritt S4 führt die Walzrundvorrichtung unter Anwendung der ermittelten Einstellungen des Prozessführungsparameters die Walzrundaufgabe insbesondere unter sequenzielle Abarbeiten der Walzrundvorgänge gemäß der Sequenz von Walzrundvorgängen aus.

Mithilfe dieses Prozessführungsmodells wird die Prozessführung objektiver. Der Maschinenbediener kann sich bei der Einstellung der Maschine zum Beispiel an mit dem Prozessführungsmodell ermittelten Startwerten orientieren, die aufgrund einer modellbasiert empirisch abgesicherten Berechnung eine hohe Zuverlässigkeit besitzen.

Im Kontext von Figur 2 nicht erläutert wurde eine Variante gemäß einer weiteren Ausführungsform, bei der die im realen Umformprozess erzielte Krümmung nach dem ersten Schritt der Prozesssequenz (d.h. dem ersten auszuführenden Walzrundvorgang aus einer entsprechenden Sequenz von Walzrundvorgängen) vermessen und in das Prozessführungsmodell eingegeben wird. Dieses kann daraufhin ein Vergleich zwischen Berechnung und Realität anstellen. Unter der idealisierten Annahme, dass die Abweichung der Modellrechnung einzig auf eine unterschiedliche Festigkeit des realen Werkstoffs zurückgeführt werden kann, kann das Modell eine korrigierte Schätzung für die Dehngrenze vornehmen. Darauf aufbauend können neue Berechnungen für die Maschineneinstellungen der noch ausstehenden Prozessschritte bzw. Walzrundvorgänge unter Verwendung der korrigierten Dehngrenze durchgeführt werden. Das Prozessführungsmodell ist damit in der Lage, seine Berechnungen empirisch an das reale Umformverhalten eines Blechs anzupassen. Hierdurch kann eine objektive Prozessführung mit einer hohen Zuverlässigkeit erreicht werden.

Abschließend werden beispielhafte Rundwalzprozesse erläutert, die jeweils eine Sequenz von unterschiedlichen Walzrundvorgängen umfassen.

In einem ersten Beispiel ist eine Sequenz aus einem einlassseitigen Biegen ohne Vorkrümmung und einem auslassseitigen Biegen mit Vorkrümmung sowie eine über die gesamte Länge zu erreichende Zielkrümmung vorgegeben. Auch jegliche Blechparameter der hierin erläuterten Art können vorgegeben werden.

Das Prozessführungsmodell ermittelt mittels eines für das einlassseitige Biegen ohne Vorkrümmung spezifischen Modells erste Maschineneinstellungen (d.h. erste Prozessführungsparameter) zum Erreichen der Zielkrümmung, bspw. über zumindest einen Großteil der Blechlänge. Aus diesem Modell ableitbar ist auch die Vorkrümmung im Einzugsbereich der Walzen, die zum Abschluss des einlassseitigen Biegens ohne Vorkrümmung (d.h. im vorstehend erläuterten stationären Biegezustand) vorliegt. Diese Vorkrümmung wird als eine Eingangsgröße für das Modell betreffend auslassseitiges Biegen mit Vorkrümmung verwendet, um für diesen Walzrundvorgang geeignete zweite Maschineneinstellungen zu bestimmen.

Der Anlagenbediener stellt daraufhin eine einlassseitige Seitenwalze entsprechend der ermittelten ersten Maschineneinstellungen ein. Daraufhin formt er das vordere bzw. das der Maschine zugeführte Ende des Blechs so lange um, bis das Blech so weit vorgeschoben wurde, dass die auslassseitige Seitenwalze an dieses angelegt werden kann. Ab diesem Zeitpunkt ist ein Wechsel auf die auslassseitige Seitenwalze und somit zum nächsten Walzvorgang aus der vorgegebenen Sequenz möglich, um das Blech über die restliche Länge auf die Zielkrümmung zu bringen.

Aus dem Vorstehenden verdeutlicht sich, dass Wechsel zwischen den Walzvorgängen durch einen Anlagenbediener selbst vorgenommen werden kann. Wann genau die Wechsel umgesetzt werden, ist nicht entscheidend. Zum Erreichen einer hohen Umformgenauigkeit ist es jedoch vorteilhaft, wenn die Wechsel dann stattfinden, wenn die Bedingungen eines stationären Zustands insbesondere für den unmittelbar folgenden Walzvorgang erfüllt sind. Es hat sich jedoch gezeigt, dass dies vom Anlagenbediener in der Regel zuverlässig erkannt werden kann.

Alternativ ist es gemäß einer weiteren Ausführungsform aber auch möglich, Abbruchbedingungen vorzugeben. Zum Beispiel kann ein Wechsel der Biegevariante beim Erreichen einer gewissen Vorschublänge vorgegeben und dies einem Anlagenbediener durch eine automatisch ausgelöste Mitteilung kenntlich gemacht werden. Damit dies präzise umgesetzt werden kann, ist ein maschinelles Messen des Vorschubs vorteilhaft.

Ein Sonderfall kann auftreten, wenn eine Sequenz mit einem auslassseitigen Walzrunden beginnt und keine Vorkrümmung vorliegt. In diesem Fall entsteht beim anfänglichen Umformen der zuvor erläuterte Knick, bei dem die Krümmung lokal überhöht ist. Das heißt, wenn das Prozessführungsmodell eine Sequenz berechnen soll, bei der mit auslassseitigem Biegen begonnen wird, dann ist die interne Zielsetzung des Prozessführungsmodells für diesen ersten Walzvorgang eine Maschineneinstellung zu berechnen, bei der ein Knick erzeugt wird, der der Zielkrümmung von z.B. 1000 mm entspricht. Der restliche Bereich wird bei diesem anfänglichen Walzvorgang verfahrensbedingt schwächer umgeformt und hat z.B. eine Krümmung von 1500 mm. Derartige Vorkrümmungen können wiederum dem darauffolgenden walzrundvorgangsspezifischen weiteren Modell der Sequenz zugeführt werden, sodass die Krümmungsdifferenz entlang der Blechlänge behoben werden kann.

Als ein weiteres Beispiel wird eine Sequenz aus zunächst auslassseitigem Biegen, einlassseitigem Biegen mit Vorkrümmung und wiederum auslassseitigem Biegen vorgegeben. Es werden Prozessführungsparameter berechnet, mit der der beim anfänglichen auslassseitigen Biegen erzeugte Knick auf die Zielkrümmung gebracht wird. Das Blech wird mit dieser Einstellung bis zum Ende (d.h. über die gesamte Länge) durchgewalzt. Es liegt somit eine geringe Vorkrümmung vor. Um das Blech über die gesamte Länge auf die Zielkrümmung zu bringen, wird die Walzrichtung umgedreht und einlassseitig mit Vorkrümmung umgeformt. Für die Berechnung der hierfür anzuwendenden Prozessführungsparameter wird dem Modell für diesen Walzvorgang die von dem ersten Modell prognostizierte Vorkrümmung zugeführt. Alternativ wird die Vorkrümmung vom Anlagenbediener vermessen und manuell eingegeben. Daraufhin wird das Blech solange umgeformt, bis es soweit vorgeschoben ist, dass die jetzt auslassseitige Seitenwalze angelegt werden kann. Diese Seitenwalze wird anhand einer weiteren Berechnung des Modells für das auslassseitige Biegen zugestellt, um mit ihr das Blech bis zum Ende umzuformen (d.h. bis die Zielkrümmung über die gesamte Länge vorliegt). Da das Blech bei diesem abschließenden auslassseitigen Biegen durch die vorherige Umformung bereits eine Vorkrümmung besitzt, die der Zielkrümmung entspricht, entsteht hierbei kein neuerlicher Knick im Blech.

Die Offenbarung schlägt zur Lösung der eingangs definierten Aufgabe insbesondere folgende Aspekte vor:
1. Verfahren zum Walzrunden eines Blechs mit einer Walzrundvorrichtung, wobei:
   - eine Steuereinrichtung wenigstens einen Aufgabenparameter erhält, der eine durchzuführende Walzrundaufgabe beschreibt, wobei der Aufgabenparameter eine Zielkrümmung angibt,
   - die Steuereinrichtung den wenigstens einen Aufgabenparameter wenigstens einem walzrundvorgangsspezifischen Modell zuführt, das für eine spezifische Art eines Walzrundvorgangs einen Zusammenhang aus einer erzielbaren Krümmung und wenigstens einem Prozessführungsparameter beschreibt,
   - die Steuereinrichtung anhand des walzrundvorgangsspezifischen Modells eine Einstellung für den wenigstens einen Prozessführungsparameter zum zumindest anteiligen Erreichen der Zielkrümmung ermittelt,
   - die Walzrundvorrichtung unter Anwendung der ermittelten Einstellung des Prozessführungsparameters die Walzrundaufgabe ausführt.
2. Verfahren nach Aspekt 1,
   wobei die Steuereinrichtung wenigstens einen weiteren Aufgabenparameter erhält, der die Art eines von der Walzrundvorrichtung durchzuführenden Walzrundvorgangs angibt, und die Steuereinrichtung dasjenige walzrundvorgangsspezifische Modell aus einer Mehrzahl von walzrundvorgangsspezifischen Modellen auswählt, das dieser Art von Walzrundvorgang zugeordnet ist.
3. Verfahren nach Aspekt 1 oder 2,
   wobei die Art des Walzrundvorgangs eine ist von:
   a) auslassseitigem Biegen,
   b) einlassseitigem Biegen ohne Vorkrümmung,
   c) einlassseitigem Biegen mit Vorkrümmung.
4. Verfahren nach Variante c) von Aspekt 3,
   wobei die Vorkrümmung als eine Eingangsgröße des wenigstens einen walzrundvorgangsspezifischen Modells erhalten wird.
5. Verfahren nach Variante a) von Aspekt 3,
   wobei das wenigstens eine walzrundvorgangsspezifische Modell auch den Zusammenhang zwischen einer Länge eines verbleibenden ungekrümmten Blechabschnitts und dem wenigstens einem Prozessführungsparameter beschreibt; und/oder
   wobei das wenigstens eine walzrundvorgangsspezifische Modell auch den Zusammenhang eines Ausmaßes eines Knicks, der zwischen einem gekrümmten und einem ungekrümmten Abschnitt des Blechs (16) vorliegt, und dem wenigstens einem Prozessführungsparameter beschreibt.
6. Verfahren nach einem der vorangehenden Aspekte,
   wobei der wenigstens eine Prozessführungsparameter eine Walzenzustellung oder ein Anpressdruck ist.
7. Verfahren nach einem der vorangehenden Aspekte,
   wobei als eine Eingangsgröße des wenigstens einen walzrundvorgangsspezifischen Modells wenigstens eine Dicke und optional wenigstens eine andere Abmessung des Blechs und/oder eine Dehngrenze oder eine andere mechanische Eigenschaft des Blechmaterials erhalten wird.
8. Verfahren nach Aspekt 7,
   wobei als eine Eingangsgröße die Dehngrenze erhalten wird, wobei die Dehngrenze eines Mindestdehngrenze des Blechmaterials ist.
9. Verfahren nach einem der vorangehenden Aspekte,
   wobei als ein weiterer Aufgabenparameter eine umzusetzende Sequenz von Walzrundvorgängen unterschiedlicher Art erhalten wird und die Steuereinrichtung dazu eingerichtet ist, anhand von diesen Arten zugeordneten walzrundvorgangsspezifischen Modellen eine Einstellung für wenigstens einen Prozessführungsparameter für jeden der Walzrundvorgänge zu ermitteln.
10. Verfahren nach einem der vorangehenden Aspekte,
   ferner umfassend: Messen einer bei Ausführen der Walzrundaufgabe zwischenzeitlich hergestellten Krümmung und Verwenden des Messergebnisses zum erneuten Bestimmen der Einstellung des wenigstens einen Prozessführungsparameters anhand des wenigstens einen walzrundvorgangsspezifischen Modells.
11. Verfahren nach einem der vorangehenden Aspekte,
   ferner aufweisend: Erzeugen des wenigstens einen walzrundvorgangsspezifischen Modells,
   wobei das Erzeugen umfasst:
      computergestütztes Simulieren eines Walzrundvorgangs, wobei für wenigstens zwei unterschiedliche Einstellungen von wenigstens einem Prozessführungsparameter eine jeweils erzielbare Krümmung ermittelt wird und darauf basierend ein Zusammenhang der erzielbaren Krümmung und des Prozessführungsparameters ermittelt wird.
12. Verfahren nach Aspekt 11,
   wobei für jede Einstellung des wenigstens einen Prozessführungsparameters die erzielbare Krümmung in einem definierten Biegezustand ermittelt wird.
13. Verfahren nach Aspekt 12,
   wobei der definierte Biegezustand ein stationärer Biegezustand ist, bei dem bei fortlaufendem Blechvorschub an sämtlichen ortsfesten Positionen innerhalb des Eingriffsbereichs von aktiven Walzen der Walzrundvorrichtung die im Wesentlichen gleiche Krümmung vorliegt.
14. Verfahren nach einem der Aspekte 11 bis 13,
   wobei der Walzrundvorgang unter Berücksichtigung von verschiedenen Werten von wenigstens einem Blechkonfigurationsparameter simuliert wird, und
   der ermittelte Zusammenhang in Abhängigkeit des wenigstens einen Blechkonfigurationsparameters ermittelt wird.
15. Verfahren zum computergestützten Erzeugen eines Modells eines von einer Walzrundvorrichtung ausgeführten Walzrundvorgangs, mit:
   computergestütztes Simulieren eines Walzrundvorgangs, wobei für wenigstens zwei unterschiedliche Einstellungen von wenigstens einem Prozessführungsparameter eine jeweils erzielbare Krümmung in einem definierten Biegezustand ermittelt wird, und
   darauf basierendem Ermitteln eines Zusammenhangs der erzielbaren Krümmung und des Prozessführungsparameters,
   wobei der definierte Biegezustand ein stationärer Biegezustand ist, bei dem bei fortlaufendem Blechvorschub an sämtlichen ortsfesten Positionen innerhalb des Eingriffsbereichs von aktiven Walzen der Walzrundvorrichtung die im Wesentlichen gleiche Krümmung vorliegt.
16. System zum Walzrunden eines Blechs, umfassend:
   - eine Steuereinrichtung, die dazu eingerichtet ist,:
      - wenigstens einen Aufgabenparameter zu erhalten, der eine durchzuführende Walzrundaufgabe beschreibt, wobei der Aufgabenparameter eine Zielkrümmung angibt,
      - den wenigstens einen Aufgabenparameter wenigstens einem walzrundvorgangsspezifischen Modell zuzuführen, das für eine spezifische Art eines Walzrundvorgangs einen Zusammenhang aus einer erzielbaren Krümmung und wenigstens einem Prozessführungsparameter beschreibt, und
      - anhand des walzrundvorgangsspezifischen Modells eine Einstellung für den wenigstens einen Prozessführungsparameter zum zumindest anteiligen Erreichen der Zielkrümmung zu ermitteln,
   - eine Walzrundvorrichtung, die dazu eingerichtet ist, unter Anwendung der ermittelten Einstellung des Prozessführungsparameters die Walzrundaufgabe auszuführen.

## Patentansprüche

1. Verfahren zum Walzrunden eines Blechs (16) mit einer Walzrundvorrichtung (20), wobei:
• eine Steuereinrichtung (30) wenigstens einen Aufgabenparameter erhält, der eine durchzuführende Walzrundaufgabe beschreibt, wobei der Aufgabenparameter eine Zielkrümmung angibt,
• die Steuereinrichtung (30) den wenigstens einen Aufgabenparameter wenigstens einem walzrundvorgangsspezifischen Modell zuführt, das für eine spezifische Art eines Walzrundvorgangs einen Zusammenhang aus einer erzielbaren Krümmung und wenigstens einem Prozessführungsparameter beschreibt,
• die Steuereinrichtung (30) anhand des walzrundvorgangsspezifischen Modells eine Einstellung für den wenigstens einen Prozessführungsparameter zum zumindest anteiligen Erreichen der Zielkrümmung ermittelt,
die Walzrundvorrichtung (20) unter Anwendung der ermittelten Einstellung des Prozessführungsparameters die Walzrundaufgabe ausführt;
wobei das Verfahren wenigstens eine der folgenden Varianten I)-III) umfasst:
I. die Steuereinrichtung (30) erhält wenigstens einen weiteren Aufgabenparameter, der die Art eines von der Walzrundvorrichtung (20) durchzuführenden Walzrundvorgangs angibt, und die Steuereinrichtung (30) wählt dasjenige walzrundvorgangsspezifische Modell aus einer Mehrzahl von walzrundvorgangsspezifischen Modellen aus, das dieser Art von Walzrundvorgang zugeordnet ist;
II. die Art des Walzrundvorgangs ist eine von:
a) auslassseitigem Biegen,
b) einlassseitigem Biegen ohne Vorkrümmung,
c) einlassseitigem Biegen mit Vorkrümmung;
III. als ein weiterer Aufgabenparameter wird eine umzusetzende Sequenz von Walzrundvorgängen unterschiedlicher Art erhalten und die Steuereinrichtung ermittelt anhand von diesen Arten zugeordneten walzrundvorgangsspezifischen Modellen eine Einstellung für wenigstens einen Prozessführungsparameter für jeden der Walzrundvorgänge.

2. Verfahren nach Variante II)-c) von Anspruch 1,
wobei die Vorkrümmung als eine Eingangsgröße des wenigstens einen walzrundvorgangsspezifischen Modells erhalten wird.

3. Verfahren nach Variante II)-a) von Anspruch 1,
wobei das wenigstens eine walzrundvorgangsspezifische Modell auch den Zusammenhang zwischen einer Länge eines verbleibenden ungekrümmten Blechabschnitts und dem wenigstens einem Prozessführungsparameter beschreibt; und/oder
wobei das wenigstens eine walzrundvorgangsspezifische Modell auch den Zusammenhang eines Ausmaßes eines Knicks, der zwischen einem gekrümmten und einem ungekrümmten Abschnitt des Blechs (16) vorliegt, und dem wenigstens einem Prozessführungsparameter beschreibt.

4. Verfahren nach einem der vorangehenden Ansprüche,
wobei der wenigstens eine Prozessführungsparameter eine Walzenzustellung oder ein Anpressdruck ist.

5. Verfahren nach einem der vorangehenden Ansprüche,
wobei als eine Eingangsgröße des wenigstens einen walzrundvorgangsspezifischen Modells wenigstens eine Dicke und optional wenigstens eine andere Abmessung des Blechs (16) und/oder eine Dehngrenze oder eine andere mechanische Eigenschaft des Blechmaterials erhalten wird.

6. Verfahren nach Anspruch 5,
wobei als eine Eingangsgröße die Dehngrenze erhalten wird, wobei die Dehngrenze eines Mindestdehngrenze des Blechmaterials ist.

7. Verfahren nach einem der vorangehenden Ansprüche,
ferner umfassend: Messen einer bei Ausführen der Walzrundaufgabe zwischenzeitlich hergestellten Krümmung und Verwenden des Messergebnisses zum erneuten Bestimmen der Einstellung des wenigstens einen Prozessführungsparameters anhand des wenigstens einen walzrundvorgangsspezifischen Modells.

8. Verfahren nach einem der vorangehenden Ansprüche,
ferner aufweisend: Erzeugen des wenigstens einen walzrundvorgangsspezifischen Modells,
wobei das Erzeugen umfasst:
computergestütztes Simulieren eines Walzrundvorgangs, wobei für wenigstens zwei unterschiedliche Einstellungen von wenigstens einem Prozessführungsparameter eine jeweils erzielbare Krümmung ermittelt wird und darauf basierend ein Zusammenhang der erzielbaren Krümmung und des Prozessführungsparameters ermittelt wird.

9. Verfahren nach Anspruch 8,
wobei für jede Einstellung des wenigstens einen Prozessführungsparameters die erzielbare Krümmung in einem definierten Biegezustand ermittelt wird.

10. Verfahren nach Anspruch 9,
wobei der definierte Biegezustand ein stationärer Biegezustand ist, bei dem bei fortlaufendem Blechvorschub an sämtlichen ortsfesten Positionen innerhalb des Eingriffsbereichs von aktiven Walzen (12, 14) der Walzrundvorrichtung (20) die im Wesentlichen gleiche Krümmung vorliegt.

11. Verfahren nach einem der Ansprüche 8 bis 10,
wobei der Walzrundvorgang unter Berücksichtigung von verschiedenen Werten von wenigstens einem Blechkonfigurationsparameter simuliert wird, und
der ermittelte Zusammenhang in Abhängigkeit des wenigstens einen Blechkonfigurationsparameters ermittelt wird.

12. Verfahren zum computergestützten Erzeugen eines Modells eines von einer Walzrundvorrichtung (20) ausgeführten Walzrundvorgangs, mit:
computergestütztes Simulieren eines Walzrundvorgangs, wobei für wenigstens zwei unterschiedliche Einstellungen von wenigstens einem Prozessführungsparameter eine jeweils erzielbare Krümmung in einem definierten Biegezustand ermittelt wird, und
darauf basierendem Ermitteln eines Zusammenhangs der erzielbaren Krümmung und des Prozessführungsparameters,
wobei der definierte Biegezustand ein stationärer Biegezustand ist, bei dem bei fortlaufendem Blechvorschub an sämtlichen ortsfesten Positionen innerhalb des Eingriffsbereichs von aktiven Walzen (12, 14) der Walzrundvorrichtung (20) die im Wesentlichen gleiche Krümmung vorliegt.

13. System (10) zum Walzrunden eines Blechs (16), umfassend:
• eine Steuereinrichtung (30), die dazu eingerichtet ist,:
- wenigstens einen Aufgabenparameter zu erhalten, der eine durchzuführende Walzrundaufgabe beschreibt, wobei der Aufgabenparameter eine Zielkrümmung angibt,
- den wenigstens einen Aufgabenparameter wenigstens einem walzrundvorgangsspezifischen Modell zuzuführen, das für eine spezifische Art eines Walzrundvorgangs einen Zusammenhang aus einer erzielbaren Krümmung und wenigstens einem Prozessführungsparameter beschreibt, und
- anhand des walzrundvorgangsspezifischen Modells eine Einstellung für den wenigstens einen Prozessführungsparameter zum zumindest anteiligen Erreichen der Zielkrümmung zu ermitteln,
eine Walzrundvorrichtung (20), die dazu eingerichtet ist, unter Anwendung der ermittelten Einstellung des Prozessführungsparameters die Walzrundaufgabe auszuführen,
wobei ferner wenigstens eine der folgenden Varianten I)-III) vorgesehen ist:
I. die Steuereinrichtung (30) ist dazu eingerichtet, wenigstens einen weiteren Aufgabenparameter zu erhalten, der die Art eines von der Walzrundvorrichtung (20) durchzuführenden Walzrundvorgangs angibt, und die Steuereinrichtung (30) ist dazu eingerichtet dasjenige walzrundvorgangsspezifische Modell aus einer Mehrzahl von walzrundvorgangsspezifischen Modellen auszuwählen, das dieser Art von Walzrundvorgang zugeordnet ist;
II. die Art des Walzrundvorgangs ist eine von:
a) auslassseitigem Biegen,
b) einlassseitigem Biegen ohne Vorkrümmung,
c) einlassseitigem Biegen mit Vorkrümmung;
III. als ein weiterer Aufgabenparameter wird eine umzusetzende Sequenz von Walzrundvorgängen unterschiedlicher Art erhalten und die Steuereinrichtung ist ferner dazu eingerichtet, anhand von diesen Arten zugeordneten walzrundvorgangsspezifischen Modellen eine Einstellung für wenigstens einen Prozessführungsparameter für jeden der Walzrundvorgänge zu ermitteln.
